# EUROPÄISCHE PATENTSCHRIFT

(11) **EP 1 711 566 B1**
(45) Veröffentlichungstag und Bekanntmachung des Hinweises auf die Patenterteilung: **14.05.2008**
(21) Anmeldenummer: 04804711.2
(22) Anmeldetag: 07.12.2004
(51) Int. Cl.: C09D 161/02, C09J 161/02, C08G 6/02, C08L 61/02, C09J 161/24, C09D 161/24, C08L 61/24, C08L 61/32, C09D 161/32, C09J 161/32, C09D 4/06

(54) **VERWENDUNG STRAHLENHÄRTBARER HARZE AUF BASIS VON KETON- UND/ ODER HARNSTOFF-ALDEHYDHARZEN**
UTILIZATION OF RADIOHARDENABLE RESINS BASED ON KETONE AND/OR UREA ALDEHYDE RESINS
UTILISATION DE RESINES RADIODURCISSABLES A BASE DE RESINES CETONE ALDEHYDE ET/OU UREE ALDEHYDE

(30) Priorität: 03.02.2004 DE 102004005207
(43) Veröffentlichungstag der Anmeldung: 18.10.2006
(73) Patentinhaber: Evonik Degussa GmbH, 40474 Düsseldorf (DE)
(72) Erfinder: GLÖCKNER, Patrick, 45721 Haltern am See (DE); MINDACH, Lutz, 45770 Marl (DE)
(86) Internationale Anmeldenummer: PCT/EP2004/053315
(87) Internationale Veröffentlichungsnummer: WO 2005/075584

(56) Entgegenhaltungen:
- EP-A- 0 736 074
- EP-A- 1 508 581
- DE-B1- 2 438 724

## Beschreibung

Die Erfindung betrifft die Verwendung strahlenhärtbarer Harze auf Basis von Keton- und Hamstoff-Aldehydharzen.

Strahlenhärtbare Beschichtungsstoffe haben innerhalb der letzten Jahre zunehmend an Bedeutung gewonnen, da u. a. der Gehalt an flüchtigen organischen Verbindungen (VOC) dieser Systeme gering ist.

Die filmbildenden Komponenten sind im Beschichtungsstoff relativ niedermolekular und deshalb niedrigviskos, so dass auf hohe Anteile organischer Lösemittel verzichtet werden kann. Dauerhafte Beschichtungen werden erhalten, indem nach Applikation des Beschichtungsstoffes ein hochmolekulares, polymeres Netzwerk durch z. B. Elektronenstrahlen oder UV-Licht initiierte Vernetzungsreaktionen gebildet wird.

Hartharze wie z.B. Keton-Aldehydharze werden in Beschichtungsstoffen z. B. als Additivharze eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u.a. als filmbildende Funktionsfüllstoffe.

Üblicherweise verfügen Keton-Aldehydharze über Hydroxygruppen und können daher nur mit z. B. Polyisocyanaten oder Aminharzen vernetzt werden. Diese Vernetzungsreaktionen werden üblicherweise thermisch eingeleitet bzw. beschleunigt.

Für strahlungsinitiierte Vernetzungsreaktionen nach kationischen und/oder radikalischen Reaktionsmechanismen sind die Keton-Aldehydharze nicht geeignet.

Daher werden die Keton-Aldehydharze üblicherweise in strahlenhärtbaren Beschichtungsstoff-Systemen z. B. als filmbildende, passive, d. h. nicht vernetzende Zusatzkomponente eingesetzt. Derartige Beschichtungen besitzen oft wegen der unvernetzten Harz-Anteile eine geringere Widerstandsfähigkeit gegenüber z. B. Benzin, Chemikalien oder Lösemitteln.

WO 95/17476, DE 23 45 624, EP 736 074, DE 28 47 796, DD 24 0318, DE 24 38 724, JP 09143396 beschreiben die Verwendung von Keton-Aldehyd- und Ketonharzen, z. B. Cyclohexanon-Formaldehydharzen in strahlenhärtbaren Systemen. Strahleninduzierte Vernetzungsreaktionen dieser Harze sind nicht beschrieben.

EP 0 902 065 beschreibt die Verwendung von nicht strahlungshärtbaren Harzen aus Harnstoff(derivaten), Ketonen oder Aldehyden als Zusatzkomponente im Gemisch mit strahlungshärtbaren Harzen.

DE 24 38 712 beschreibt strahlungshärtende Druckfarben aus filmbildenden Harzen, Keton- und Keton-Formaldehydharzen sowie polymerisierbaren Komponenten wie polyfunktionellen Acrylatestem mehrwertiger Alkohole. Dem Fachmann ist offensichtlich, dass eine strahleninduzierte Vernetzungsreaktion der modifizierten Keton-Aldehyd- und Ketonharze nur durch die Verwendung von ungesättigten Fettsäuren eintreten kann. Es ist jedoch bekannt, dass Harze mit einem hohen Ölgehalt z. B. zu unerwünschten Vergilbungen neigen und somit die Anwendung in qualitativ hochwertigen Beschichtungen beschränkt ist.

US 4,070,500 beschreibt die Verwendung nicht-strahlungshärtbarer Keton-FormaldehydHarze als filmbildende Komponente in strahlungshärtbaren Tinten.

Aufgabe der vorliegenden Erfindung war es, strahlenhärtbare vernetzbare Harze zur Verwendung in Beschichtungsstoffen, Klebstoffen, Druckfarben und Tinten, Polituren, Lasuren, Pigmentpasten und Masterbatches, Spachtelmassen, Dicht- und Dämmstoffen und/oder Kosmetikartikeln zu finden, die dauerhafte und widerstandsfähige Beschichtungen, Dichtungen und Verklebungen ergeben, nach Vernetzung unlöslich sind sowie eine hohe Härte und Abriebfestigkeit und einen hohen Glanz sowie eine hohe Verseifungsstabilität besitzen.
Überraschender Weise konnte diese Aufgabe gelöst werden, in dem Keton-Aldehydharze und/oder Hamstoff-Aldehydharze mit ethylenisch ungesättigten Gruppierungen als Hauptkomponente, Basiskomponente oder Zusatzkomponente in strahlungshärtenden Klebstoffen, Druckfarben und Tinten, Polituren, Lasuren, Pigmentpasten und Masterbatches, Spachtelmassen, Dicht- und Dämmstoffen und/oder Kosmetikartikeln verwendet wurden.

Es hat sich gezeigt, dass die Verwendung der erfindungsgemäßen, strahlenhärtbaren Harze auf Basis von Keton-Aldehydharzen und/oder Harnstoff-Aldehydharzen als Hauptkomponente, Basiskomponente oder Zusatzkomponente in strahlungshärtenden Klebstoffen, Druckfarben und Tinten, Polituren, Lasuren, Pigmentpasten und Masterbatches, Spachtelmassen, Dicht- und Dämmstoffen und/oder Kosmetikartikeln eine Absenkung der Viskosität bewirkt, so dass auf niedermolekulare Bestandteile - insbesondere flüchtige, organische Lösemittel, die gegebenenfalls auch über reaktive Gruppen verfügen können (sog. Reaktivverdünner) - weitestgehend verzichtet werden kann, was aus umweltrelevanten und toxikologischen Gründen wünschenswert ist.

Die Verwendung der erfindungsgemäßen, strahlenhärtbarer Harze auf Basis von Keton-Aldehydharzen und/oder Harnstoff-Aldehydharzen als Hauptkomponente, Basiskomponente oder Zusatzkomponente in strahlungshärtenden Klebstoffen, Druckfarben und Tinten, Polituren, Lasuren, Pigmentpasten und Masterbatches, Spachtelmassen, Dicht- und Dämmstoffen und/oder Kosmetikartikeln bewirkt einen höheren Glanz und eine höhere Härte sowie Abriebfestigkeit, eine verbesserte Chemikalien- und Lösemittelbeständigkeit bei sehr hoher Verseifungsstabilität.

Außerdem wird die Haftung auf Substraten wie z. B. Metallen, Kunststoffen, Holz, Papier, Textilien und Glas sowie mineralischen Untergründen verbessert, wodurch der Schutz dieser Substrate erhöht wird, z. B. durch Erhöhung der Korrosionsbeständigkeit. Auch wird die Zwischenschichthaftung erhöht, so dass die Haftung weiterer applizierter Schichten verbessert wird.

Die Pigmentbenetzung wird ebenso wie die Stabilisierung der Pigmente verbessert. Es ist möglich, gleiche Farborte und Farbstärken mit einer geringeren Menge Pigment zu erreichen, werden die erfindungsgemäßen Produkte verwendet. Dies ist nicht zuletzt aus wirtschaftlichen Gründen besonders interessant, da sowohl hochpreisige Pigmente als auch additive Benetzungs- und Stabilisierungsmittel mindestens reduziert werden können.

Gegenstand ist die Verwendung strahlenhärtbarer Harze, erhalten durch polymeranaloge Umsetzung von
A) mindestens einem Keton-Aldehydharz,
   und/oder
B) mindestens einem Harnstoff-Aldehydharz,
   mit
C) mindestens einer Verbindung, welche mindestens eine ethylenisch ungesättigte Gruppierung und gleichzeitig mindestens eine gegenüber A) und B) reaktive Gruppierung aufweist,
als Hauptkomponente, Basiskomponente oder Zusatzkomponente in strahlungshärtenden Klebstoffen, Druckfarben und Tinten, Polituren, Lasuren, Pigmentpasten und Masterbatches, Spachtelmassen, Dicht- und Dämmstoffen und/oder Kosmetikartikeln.
Besonders bevorzugt ist die Verwendung der strahlenhärtbaren Harze als Hauptkomponente, Basiskomponente oder Zusatzkomponente in strahlungshärtenden Spachtelmassen, Primern, Füllern, Basis-, Deck- und Klarlacken, insbesondere auf Metallen, Kunststoffen, Holz, Papier, Textilien und Glas sowie mineralischen Untergründen.

Neben den strahlenhärtbaren Harzen können weitere Oligomere und/oder Polymere, ausgewählt aus der Gruppe der Polyurethane, Polyester, Polyacrylate, Polyolefine, Naturharze, Epoxidharze, Silikonöle und -harze, Aminharze, fluorhaltigen Polymere und ihre Derivate allein oder in Kombination enthalten sein. In Abhängigkeit der gewünschten Eigenschaften und der Art der Anwendung kann die Menge der weiteren Oligomere und/oder Polymere zwischen 98 und 5 % betragen.

Außerdem können die strahlenhärtbaren Harze auch Hilfs- und Zusatzstoffe, ausgewählt aus Inhibitoren, organischen Lösemitteln, die ggf. ungesättigte Gruppierungen enthalten, granzflächenaktiven Substanzen, Sauerstoff- und/oder Radikalfängern, Katalysatoren, Lichtschutzmitteln, Farbaufhellern, Photoinitiatoren, Photosensibilisatoren, Thixotropiermitteln, Hautverhinderungsmitteln, Entschäumern, Farbstoffen, Pigmenten, Füllstoffen und Mattierungsmittel, enthalten. Die Menge variiert stark von Einsatzgebiet und Art des Hilfs- und Zusatzstoffes.

Im Folgenden werden die erfindungsgemäßen, strahlenhärtbaren Harze auf Basis von Keton-Aldehydharzen und/oder Harnstoff-Aldehydharzen näher beschrieben.

Als Ketone zur Herstellung der Keton-Aldehydharze (Komponente A) eignen sich alle Ketone, insbesondere Aceton, Acetophenon, Methylethylketon, tert.-Butylmethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenwasserstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Im Allgemeinen können aber alle in der Literatur für Ketonharzsynthesen als geeignet genannten Ketone, in der Regel alle C-H-aciden Ketone, eingesetzt werden. Bevorzugt werden Keton-Aldehydharze auf Basis der Ketone Acetophenon, Cyclohexanon, 4-tert.-Butylcyclohexanon, 3,3,5-Trimethylcyclohexanon und Heptanon allein oder in Mischung. Als Aldehyd-Komponente der Keton-Aldehydharze (Komponente A) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im allgemeinen können alle in der Literatur für Ketonharzsynthesen als geeignet genannten Aldehyde eingesetzt werden. Bevorzugt wird jedoch Formaldehyd allein oder in Mischungen verwendet.

Das benötigte Formaldehyd wird üblicherweise als ca. 20 bis 40 Gew.-%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Aromatische Aldehyde, wie z. B. Benzaldehyd, können in Mischung mit Formaldehyd ebenfalls enthalten sein.

Besonders bevorzugt werden als Ausgangsverbindungen für die Komponente A) Acetophenon, Cyclohexanon, 4-tert.-Butylcyclohexanon, 3,3,5-Trimethylcyclohexanon sowie Heptanon allein oder in Mischung und Formaldehyd eingesetzt.

Die Herstellung und die Monomere für Komponente B) sind in EP 0 271 776 beschrieben:

Als Komponente B) werden Harnstoff-Aldehydharze unter Verwendung eines Harnstoffes der allgemeinen Formel (i) 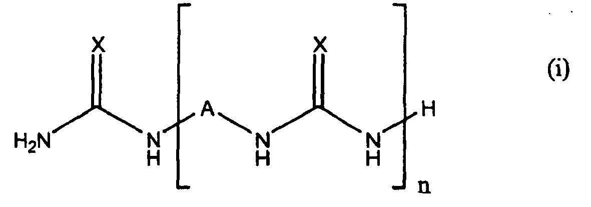 in der X Sauerstoff oder Schwefel, A einen Alkylenrest bedeuten und n für 0 bis 3 steht, mit 1,9 (n + 1) bis 2,2 (n + 1) mol eines Aldehyds der allgemeinen Formel (ii) 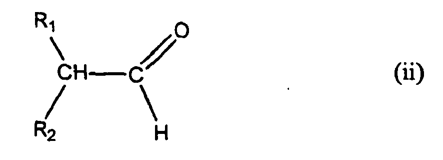 in der R₁ und R₂ für Kohlenwasserstoffreste (z. B. Alkyl-, Aryl- und / oder Alkylarylreste) mit jeweils bis zu 20 Kohlenstoffatomen stehen
und/oder Formaldehyd verwendet.

Geeignete Harnstoffe der allgemeinen Formel (i) mit n = 0 sind z. B. Harnstoff und Thioharnstoff, mit n = 1 Methylendiharnstoff, Ethylendiharnstoff, Tetramethylendiharnstoff und/oder Hexamethylendiharnstoff sowie deren Gemische. Bevorzugt ist Harnstoff.

Geeignete Aldehyde der allgemeinen Formel (ii) sind beispielsweise Isobutyraldehyd, 2-Methylpentanal, 2-Ethylhexanal und 2-Phenylpropanal sowie deren Gemische. Bevorzugt ist Isobutyraldehyd.

Formaldehyd kann in wässriger Form, die zum Teil oder ganz auch Alkohole wie z. B. Methanol oder Ethanol enthalten kann, als Paraformaldehyd und/oder Trioxan verwendet werden.

Im Allgemeinen sind alle Monomere, die in der Literatur zur Herstellung von Aldehyd-Harnstoffharzen beschrieben sind, geeignet.

Typische Zusammensetzungen sind z. B. in DE 27 57 220, DE-OS 27 57 176 sowie EP 0 271 776 beschrieben.

Die der Erfindung zugrundeliegenden strahlenhärtbaren Harze werden durch polymeranaloge Umsetzung der Keton-Aldehydharze und/oder der Hamstoff-Aldehydharze in der Schmelze oder in Lösung eines geeigneten Lösemittels mit der Komponente C) erhalten. Geeignet als Komponente C) sind Maleinsäureanhydrid, (Meth)acrylsäurederivaten wie z. B. (Meth)acryloylchlorid, Glycidyl(meth)acrylat, (Meth)acrylsäure und/oder deren niedermolekularen Alkylestern und/oder Anhydriden allein oder in Mischung. Darüber hinaus lassen sich strahlenhärtbare Harze erhalten durch Umsetzung der Keton-Aldehydharze und Harnstoff-Aldehydharze mit Isocyanaten, die über eine ethylenisch ungesättigte Gruppierung verfügen, wie z. B. (Meth)acryloylisocyanat, α,α-Dimethyl-3-isopropenylbenzylisocyanat, (Meth)acrylalkylisocyanat mit Alkylspacern, die über ein bis 12, bevorzugt 2 bis 8, besonders bevorzugt 2 bis 6 Kohlenstoffatome verfügen, wie z. B. Methacrylethylisocyanat, Methacrylbutylisocyanat. Außerdem haben sich Umsetzungsprodukte aus Hydroxyalkyl(meth)acrylaten, deren Alkylspacer über ein bis 12, bevorzugt 2 bis 8, besonders bevorzugt 2 bis 6 Kohlenstoffatome verfügen, und Diisocyanaten wie z. B. Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethy-1,8-octandiisocyanat (TIN), Dekandi- und triisocyanat, Undekandi- und -triisocyanat, Dodecandi- und - triisocyanate, Isophorondiisocyanat (IPDI), Bis(isocyanatomethyl-cyclohexyl)methan (H₁₂MDI), Isocyanatomethylmethylcyclohexyl-isocyanat, 2,5(2,6)-Bis(isocyanatomethyl)bicyclo[2.2.1]heptan (NBDI), 1,3-Bis(isocyanatomethyl)-cyclohexan (1,3-H₆-XDI) oder 1,4-Bis(isocyanatomethyl)cyclohexan (1,4-H₆-XDI) allein oder in Mischung als vorteilhaft erwiesen. Als Beispiele seien die Umsetzungsprodukte im molaren Verhältnis von 1:1 von Hydroxyethylacrylat und/oder Hydroxyethylmethacrylat mit Isophorondiisocyanat und/oder H₁₂MDI und/oder HDI genannt.

Eine andere bevorzugte Klasse von Polyisocyanaten sind die durch Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie beispielsweise IPDI, HDI und/oder HMDI mit mehrwertigen Alkoholen (z. B. Glycerin, Trimethylolpropan, Pentaerythrit) bzw. mehrwertigen Polyaminen oder die Triisocyanurate, die durch Trimerisierung der einfachen Diisocyanate, wie beispielsweise IPDI, HDI und HMDI, erhältlich sind.

Gegebenenfalls kann ein geeigneter Katalysator zur Herstellung der erfindungsgemäßen Harze eingesetzt werden. Geeignet sind alle in der Literatur bekannten Verbindungen, die eine OH-NCO-Reaktion beschleunigen, wie z. B. Diazabicyclooctan (DABCO) oder Dibutylzinndilaurat (DBTL).

Je nach Verhältnis der Edukte zueinander werden Harze erhalten, die gering bis hoch funktionell sind. Durch die Wahl der Edukte ist auch die Einstellung der späteren Härte des vernetzten Films möglich. Wird z. B. ein Hartharz wie das Cyclohexanon-Formaldehydharz mit α,α-Dimethyl-3-isopropenylbenzylisocyanat umgesetzt, werden Produkte höherer Härte erhalten als durch die Verwendung von (Meth)acrylethylisocyanat und/oder Hydroxyethylacrylat-Isophorondiisocyanat-Addukten; die Flexibilität ist allerdings dann geringer. Auch hat sich gezeigt, dass die Reaktivität von sterisch wenig gehinderten ethylenisch ungesättigten Verbindungen - wie z. B. von Hydroxyethylacrylat - höher ist als bei solchen, die sterisch gehindert sind wie z. B. α,α-Dimethyl-3-isopropenylbenzylisocyanat.

Grundsätzlich ist der Einbau ethylenisch ungesättigter Gruppierungen auch schon bei der Herstellung der Keton-Aldehyd-/Harnstoff-Aldehyd-Harze denkbar. Über die anteilige Verwendung geeigneter Monomerer, wie z. B. polymerisierbare Ketone mit olefinischen Doppelbindungen, lassen sich beliebige Funktionalisierungsgrade einstellen. Der Nachteil dieser Vorgehensweise liegt in der eingeschränkten Verfügbarkeit geeigneter Monomerbausteine.

Es ist auch möglich, einen Teil der Keton-Aldehydharze A) und/oder Harnstoff-Aldehydharze B) durch weitere hydroxyfunktionaliserte Polymere wie z. B. hydroxyfunktionelle Polyether, Polyester und/oder Polyacrylate zu ersetzen. Dabei können Mischungen dieser Polymere mit den Keton-Aldehydharzen und/oder Harnstoff-Aldehydharzen polymeranalog mit Komponente C) umgesetzt werden. Es hat sich gezeigt, dass zunächst auch Addukte der Keton-Aldehydharze und/oder Harnstoff-Aldehydharzen mit z. B. hydroxyfunktionellen Polyethern, Polyestern und/oder Polyacrylaten unter Verwendung von den oben genannten Di- und/oder Triisocyanaten hergestellt werden können, die erst dann mit Komponente. C) polymeranalog umgesetzt werden. Im Gegensatz zu den "reinen" Keton-Aldehydharzen und/oder Hamstoff-Aldehydharzen können hierdurch Eigenschaften, wie z. B. Flexibilität, Härte noch besser eingestellt werden. Die weiteren hydroxyfunktionellen Polymere besitzen in der Regel Molekulargewichte Mn zwischen 200 und 10 000 g/mol, bevorzugt zwischen 300 und 5 000 g/mol.

Die Herstellung der erfindungszugrundeliegenden Harze erfolgt in der Schmelze oder in Lösung eines geeigneten, organischen Lösemittels der Keton-Aldehydharze und/oder Harnstoff-Aldehydharze. Das organische Lösemittel kann dabei ggf. ebenfalls über ungesättigte Gruppierungen verfügen und wirkt dann direkt als Reaktivverdünner in der späteren Anwendung.

Hierzu wird in einer bevorzugten Ausführungsform I
zu der Lösung oder Schmelze der Keton-Aldehydharze A) und/oder Harnstoff-Aldehydharze B) die Verbindung C) ggf. in Anwesenheit eines geeigneten Katalysators, zugegeben.

Je nach Reaktivität der Komponente C) wird die Temperatur der Umsetzung gewählt. Bei Verwendung von Isocyanaten als Komponente C) haben sich Temperaturen zwischen 30 und 150 °C, bevorzugt zwischen 50 und 140°C bewährt.

Das ggf. enthaltene Lösemittel kann falls gewünscht nach beendeter Reaktion abgetrennt werden, wobei dann in der Regel ein Pulver des erfindungsgemäßen Produktes erhalten wird.

Es hat sich als vorteilhaft erwiesen, 1 mol der Keton-Aldehydharze und/oder Harnstoff-Aldehydharze - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform II
wird zu der Lösung oder Schmelze der Keton-Aldehydharze A) und/oder Harnstoff-Aldehydharze B) und dem hydroxyfunktionellen Polymer, wie z. B. Polyether, Polyester und/oder Polyacrylat die Verbindung C) ggf. in Anwesenheit eines geeigneten Katalysators zugegeben.
Je nach Reaktivität der Komponente C) wird die Temperatur der Umsetzung gewählt. Bei Verwendung von Isocyanaten als Komponente C) haben sich Temperaturen zwischen 30 und 150 °C, bevorzugt zwischen 50 und 140 °C bewährt.

Das ggf. enthaltene Lösemittel kann falls gewünscht nach beendeter Reaktion abgetrennt werden, wobei dann in der Regel ein Pulver des erfindungsgemäßen Produktes erhalten wird. Es hat sich als vorteilhaft erwiesen, 1 mol der Keton-Aldehydharze und/oder Harnstoff-Aldehydharze und/oder zusätzlicher Polymere - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform III
wird zu der Lösung oder Schmelze der Keton-Aldehydharze A) und/oder Harnstoff-Aldehydharze B) und dem hydroxyfunktionellen Polymer, wie z. B. Polyether, Polyester und/oder Polyacrylat ein di- und/oder trifunktionelles Isocyanat gegeben und ein hydroxyfunktionelles Präaddukt hergestellt. Erst dann wird die Verbindung C) ggf. in Anwesenheit eines geeigneten Katalysators zugegeben.

Je nach Reaktivität der Komponente C) wird die Temperatur der Umsetzung gewählt. Bei Verwendung von Isocyanaten als Komponente C) haben sich Temperaturen zwischen 30 und 150 °C, bevorzugt zwischen 50 und 140 °C bewährt.

Das ggf. enthaltene Lösemittel kann falls gewünscht nach beendeter Reaktion abgetrennt werden, wobei dann in der Regel ein Pulver des erfindungsgemäßen Produktes erhalten wird. Es hat sich als vorteilhaft erwiesen, 1 mol der Keton-Aldehydharze und/oder Harnstoff-Aldehydharze und/oder zusätzlicher Polymere - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In Gegenwart geeigneter Photoinitiatoren, ggf. in Anwesenheit geeigneter Photosensibilisatoren lassen sich diese Harze durch Bestrahlung in polymere, unlösliche Netzwerke überführen, die, je nach Gehalt ethylenisch ungesättigter Gruppen, Elastomere bis Duroplaste ergeben.

Die folgenden Beispiele sollen die Erfindung weiter erläutern aber nicht ihren Anwendungsbereich beschränken:

### Beispiele

### Herstellung eines strahlungsvernetzenden Harzes (UV 22):

Die Synthese erfolgt, indem 1 mol eines wasserfreien Cyclohexanon-Formaldehydharzes (Wassergehalt < 0,2 Gew.-%, OHZ = 105 mg KOH/g (Acetanhydridmethode), Mn ~ 650 g/mol, gegen Polystyrol) mit 1,2 mol eines Umsetzungsproduktes aus IPDI und Hydroxyethylacrylat im Verhältnis 1 : 1 in Anwesenheit von 0,2 % (auf Harz) 2,6-Bis(tert-butyl)-4-methylphenol (Ralox BHT, Degussa AG) und 0,1 % (auf Harz) Dibutylzinndilaurat 65%ig in Methoxypropylacetat in einem Dreihalskolben mit Rührer, Rückflusskühler und Thermofühler in Stickstoffatmosphäre solange bei 80 °C zur Reaktion gebracht werden, bis eine NCO-Zahl unter 0,1 erreicht wird. Die erhaltende helle, klare Lösung besitzt eine dynamische Viskosität von 11,5 Pa.s.

### Anwendungsbeispiele

Als Basisharz (UV 20) diente ein Addukt aus Trimethylolpropan, IPDI, Terathane 650 sowie Hydroxyethylacrylat, 70%ig gelöst in MOP-Acetat, Viskosität 23 °C = 19,2 Pas.

### Viskositäten der unterschiedlichen Systeme 50%ig in MOP-Acetat ohne Photoinitiator

| **Nummer** BXXVB / xxx / 03 | **Mischungsverhältnis Feststoff** | **dyn. Viskosität 23°C** |
|---|---|---|
| **Mischungen** | | |
| 481 | A-UV 20 | 775 mPas |
| 500 | A-UV 20 : A-UV 22 = 95 : 5 | 715 mPas |
| 501 | A-UV 20: A-UV 22 = 90 : 10 | 710 mPas |
| 502 | A-UV 20 : A-UV 22 = 80 : 20 | 590 mPas |

Mit zunehmendem Anteil der erfindungsgemäßen Produkte sinkt die dynamische Viskosität der Formulierungen.

### Zusammenfassung der ermittelten Lackdaten

Die Mischungen wurden mit Darocure 1173 versehen (Menge s. Tab.) und mit einem Rakel auf Metallbleche aufgezogen. Die Systeme sind lösemittelhaltig; deshalb wurde im Umluftofen 30 min bei 80 °C vorgetrocknet. Dann wurden die Filme mittels UV-Licht (Quecksilber-Mitteldruck-Lampe, 70 W / optischer Filter 350 nm) ausgehärtet (3x6 s).

| **Lack-Nr.** | **Harz Misch.** | **1173** | **nfA.** | **Lackdaten** | | | | | |
|---|---|---|---|---|---|---|---|---|---|
| BXXVII/xxx/03 | **a.H.** | **[% a.H.]** | **[%]** | **SD** µ | **GS/ Tesa** | **HB** | **ET** | **HK** | **Verlauf** |
| 481 | A-UV 20 | 1,50 | 50,4 | 31-39 | 2B/ 5B | n.m. | n.m. | 38 | minimal unruhig klebrig |
| 500 | A-UV 20 95 | 1,50 | 50,4 | 31-34 | 0-1B/ | 63 | n.m. | 39 | ok |
| | | | | | | | | | |
| 501 | A-UV 20 90 | 1,50 | 50,4 | 27-32 | 0-1B/ | 67 | n.m. | 43 | minimal unruhig |
| | A-UV 22 10 | | | | 5B | | | | |
| 502 | A-UV 22 80 | 1,50 | 50,4 | 26-31 | 0B/ 3B | 73 | >10,5 | 45 | minimal unruhig |
| | | | | | | | | | |

| | | | | | | | | | |
|---|---|---|---|---|---|---|---|---|---|
| **1173** : **Darocur 1173** | | | | | | | | | |

Durch chemische Vernetzung der erfindungsgemäßen Produkte werden die Härte und die Haftung erhöht. Außerdem werden die Filme weniger klebrig und die Werte der Erichsentiefung werden verbessert.

### Abkürzungen

DBTL: Dibutylzinndilaurat
ET: Erichsentiefung
HB: Buchholzhärte
HK: Pendelhärte nach König
IPDI: Isophorondiisocyanat
MOP-Acetat : Methoxypropylacetat
nfA.: nicht flüchtige Bestandteile
SD : Schichtstärke

## Patentansprüche

1. Verwendung strahlenhärtbarer Harze, erhalten durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und B) reaktive Gruppierung aufweist,
als Hauptkomponente, Basiskomponente oder Zusatzkomponente in strahlungshärtenden Klebstoffen, Druckfarben und Tinten, Polituren, Lasuren, Pigmentpasten und Masterbatches, Spachtelmassen, Dicht- und Dämmstoffen und/oder Kosmetikartikeln.

2. Verwendung strahlenhärtbarer Harze nach Anspruch 1,
erhalten durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und B) reaktive Gruppierung aufweist, und mindestens einem weiteren hydroxylfunktionaliserten Polymer.

3. Verwendung strahlenhärtbarer Harze nach Anspruch 2,
**dadurch gekennzeichnet,**
**dass** als weitere hydroxyfunktionelle Polymere Polyether, Polyester und/oder Polyacrylat enthalten sind.

4. Verwendung strahlenhärtbarer Harze nach Anspruch 2 oder 3,
wobei Mischungen der weiteren Polymere mit den Keton-Aldehydharzen A) und/oder Hamstoff-Aldehydharzen B) polymeranalog mit Komponente C) umgesetzt werden.

5. Verwendung strahlenhärtbarer Harze nach Anspruch 2 bis 4,
wobei zunächst Addukte aus den Keton-Aldehydharzen A) und/oder Harnstoff-Aldehydharzen B) mit den weiteren Polymeren unter Verwendung geeigneter Di- und/oder Triisocyanaten hergestellt werden, die erst dann mit Komponente C) polymeranalog umgesetzt werden.

6. Verwendung strahlenhärtbarer Harze nach mindestens einem der vorhergehenden Ansprüche,
**dadurch gekennzeichnet,**
**dass** C-H-acide Ketone in der Komponente A) eingesetzt werden.

7. Verwendung strahlenhärtbarer Harze nach mindestens einem der vorherigen Ansprüche,
**dadurch gekennzeichnet,**
**dass** in den Keton-Aldehydharzen der Komponente A), Ketone ausgewählt aus Aceton, Acetophenon, Methylethylketon, tert.-Butylmethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon, Cyclooctanon, Cyclohexanon als Ausgangsbindungen allein oder in Mischungen eingesetzt werden.

8. Verwendung strahlenhärtbarer Harze nach mindestens einem der vorherigen Ansprüche,
**dadurch gekennzeichnet,**
**dass** in den Keton-Aldehydharzen der Komponente A) alkylsubistituierte Cyclohexanone mit einem oder mehreren Alkylresten, die insgesamt 1 bis 8 Kohlenwasserstoffatome aufweisen, einzeln oder in Mischung eingesetzt werden.

9. Verwendung strahlenhärtbarer Harze nach Anspruch 8,
**dadurch gekennzeichnet,**
**dass** in den Keton-Aldehydharzen der Komponente A) 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon eingesetzt werden.

10. Verwendung strahlenhärtbarer Harze nach mindestens einem der vorherigen Ansprüche,
**dadurch gekennzeichnet,**
**dass** Acetophenon, Cyclohexanon, 4-tert.-Butylcyclohexanon, 3,3,5-Trimethylcyclohexanon und Heptanon allein oder in Mischung in der Komponente A) eingesetzt werden.

11. Verwendung strahlenhärtbarer Harze nach mindestens einem der vorherigen Ansprüche,
**dadurch gekennzeichnet,**
**dass** als Aldehyd-Komponente der Keton-Aldehydharze in Komponente A) Formaldehyd, Acetaldehyd, n-Butyraldehyd und/oder iso-Butyraldehyd, Valerianaldehyd, Dodecanal allein oder in Mischungen eingesetzt werden.

12. Verwendung strahlenhärtbarer Harze nach Anspruch 11,
**dadurch gekennzeichnet,**
**dass** als Aldehyd-Komponente der Keton-Aldehydharze in Komponente A) Formaldehyd und/oder para-Formaldehyd und/oder Trioxan eingesetzt werden.

13. Verwendung strahlenhärtbarer Harze nach Anspruch 1, oder 2,
**dadurch gekennzeichnet,**
**dass** Harze aus Acetophenon, Cyclohexanon, 4-tert.-Butylcyclohexanon, 3,3,5-Trimethylcyclohexanon, Heptanon allein oder in Mischung und Formaldehyd (Komponente A) eingesetzt werden.

14. Verwendung strahlenhärtbarer Harze nach einem der vorherigen Ansprüche,
**dadurch gekennzeichnet,**
**dass** als Komponente B) Harnstoff-Aldehydharze, hergestellt unter Verwendung eines Harnstoffes der allgemeinen Formel (i) 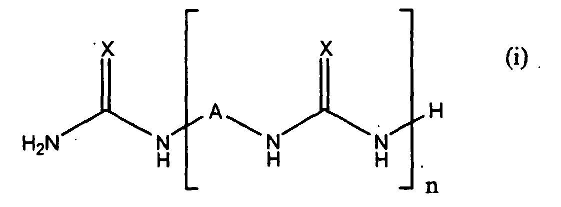 in der X Sauerstoff oder Schwefel, A einen Alkylenrest bedeuten und n für 0 bis 3 steht, mit 1,9 (n + 1) bis 2,2 (n + 1) mol eines Aldehyds der allgemeinen Formel (ii) 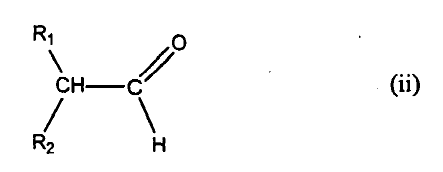 in der R₁ und R₂ für Kohlenwasserstoffreste mit jeweils bis zu 20 Kohlenstoffatomen stehen
und/oder
Formaldehyd, eingesetzt werden.

15. Verwendung strahlenhärtbarer Harze nach einem der vorherigen Ansprüche,
**dadurch gekennzeichnet,**
**dass** als Komponente B) Harnstoff-Aldehydharze hergestellt unter Verwendung von Harnstoff und Thioharnstoff, Methylendiharnstoff, Ethylendiharnstoff, Tetramethylendiharnstoff und/oder Hexamethylendiharnstoff oder deren Gemische eingesetzt werden.

16. Verwendung strahlenhärtbarer Harze nach einem der vorherigen Ansprüche,
**dadurch gekennzeichnet,**
**dass** als Komponente B) Harnstoff-Aldehydharze hergestellt unter Verwendung von Isobutyraldehyd, Formaldehyd, 2-Methylpentanal, 2-Ethylhexanal und 2-Phenylpropanal oder deren Gemische eingesetzt werden.

17. Verwendung strahlenhärtbarer Harze nach einem der vorherigen Ansprüche,
**dadurch gekennzeichnet,**
**dass** als Komponente B) Harnstoff-Aldehydharze hergestellt unter Verwendung von Harnstoff, Isobutyraldehyd und Formaldehyd
eingesetzt werden.

18. Verwendung strahlenhärtbarer Harze nach mindestens einem der vorherigen Ansprüche,
**dadurch gekennzeichnet,**
**dass** als Komponente C) Maleinsäure eingesetzt wird.

19. Verwendung strahlenhärtbarer Harze nach mindestens einem der vorherigen Ansprüche,
**dadurch gekennzeichnet,**
**dass** als Komponente C) (Meth)acrylsäure und/oder Derivate eingesetzt werden.

20. Verwendung strahlenhärtbarer Harze nach Anspruch 19,
**dadurch gekennzeichnet,**
**dass** als Komponente C) (Meth)acryloylchlorid, Glycidyl(meth)acrylat, (Meth)acrylsäure und/oder deren niedermolekulare Alkylester und/oder Anhydriden allein oder in Mischung eingesetzt werden.

21. Verwendung strahlenhärtbarer Harze nach mindestens einem der vorherigen Ansprüche,
**dadurch gekennzeichnet,**
**dass** als Komponente C) Isocyanate, die über eine ethylenisch ungesättigte Gruppierung verfügen, bevorzugt (Meth)acryloylisocyanat, α,α-Dimethyl-3-isopropenylbenzylisocyanat, (Meth)acrylalkylisocyanat mit Alkylspacern, die über 1 bis 12, bevorzugt 2 bis 8, besonders bevorzugt 2 bis 6 Kohlenstoffatome verfügen, bevorzugt Methacrylethylisocyanat, Methacrylbutylisocyanat, eingesetzt werden.

22. Verwendung strahlenhärtbarer Harze nach mindestens einem der vorherigen Ansprüche,
**dadurch gekennzeichnet,**
**dass** als Komponente C) Umsetzungsprodukte aus Hydroxyalkyl(meth)acrylaten, deren Alkylspacer über 1 bis 12, bevorzugt 2 bis 8, besonders bevorzugt 2 bis 6 Kohlenstoffatome verfügen, mit Di- und/oder Polyisocyanaten eingesetzt werden.

23. Verwendung strahlenhärtbarer Harze nach Anspruch 22,
**dadurch gekennzeichnet,**
**dass** Diisocyanate ausgewählt aus Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, Hexandiisocyanat, z.B. wie Hexamethylendiisocyanat (HDI) oder 1,5-Diisocyanato-2-methylpentan (MPDI), Heptandiisocyanat, Octandiisocyanat, 1,6-Diisocyanato-2,4,4-trimethylhexan, 1,6-Diisocyanato-2,2,4-trimethylhexan (TMDI), 4-Isocyanatomethyl-1,8-octandiisocyanat (TIN), Dekandi- und triisocyanat, Undekandi- und -triisocyanat, Dodecandi- und - triisocyanate, Isophorondiisocyanat (IPDI), Bis(isocyanatomethyl-cyclohexyl)methan (H₁₂MDI), Isocyanatomethylmethylcyclohexylisocyanat, 2,5(2,6)-Bis(isocyanatomethyl)bicyclo [2.2.1]heptan (NBDI), 1,3-Bis(isocyanatomethyl)cyclohexan (1,3-H₆-XDI), 1,4-Bis(isocyanatomethyl)cyclohexan (1,4-H₆-XDI) allein oder in Mischungen, eingesetzt werden.

24. Verwendung strahlenhärtbarer Harze nach Anspruch 23,
**dadurch gekennzeichnet,**
**dass** Polyisocyanate, hergestellt durch Trimerisierung, Allophanatisierung, Biuretisierung und/oder Urethanisierung einfacher Diisocyanate, eingesetzt werden.

25. Verwendung strahlenhärtbarer Harze nach mindestens einem der vorherigen Ansprüche,
**dadurch gekennzeichnet,**
**dass** als Komponente C) die Umsetzungsprodukte im molaren Verhältnis von 1:1 1 bis 1: 1,5, bevorzugt 1:1 von Hydroxyethylacrylat und/oder Hydroxyethylmethacrylat mit Isophorondiisocyanat und/oder H₁₂MDI und/oder HDI eingesetzt werden.

26. Verwendung strahlenhärtbarer Harze nach mindestens einem der vorherigen Ansprüche,
**dadurch gekennzeichnet,**
**dass** 1 mol des Keton-Aldehydharzes und/oder Harnstoff Aldehydharzes - bezogen auf Mₙ - und 0,5 bis 15 mol, bevorzugt 1 bis 10 mol, besonders 2 bis 8 mol der ungesättigten Verbindung eingesetzt werden.

27. Verwendung strahlenhärtbarer Harze nach mindestens einem der vorherigen Ansprüche als Hauptkomponente, Basiskomponente oder Zusatzkomponente in strahlungshärtenden Beschichtungsstoffen wie Primern, Füllern, Basis-, Deck- und Klarlacken sowie in strahlungshärtenden Klebstoffen, Druckfarben und Tinten, Polituren, Lasuren, Pigmentpasten und Masterbatches, Spachtelmassen, Kosmetikartikeln und / oder Dicht- und Dämmstoffen.

28. Verwendung strahlenhärtbarer Harze nach mindestens einem der vorherigen Ansprüche für Metalle, Kunststoffe, Holz, Papier, Textilien und Glas sowie mineralischen Untergründen.

29. Verwendung strahlenhärtbarer Harze nach mindestens einem der vorherigen Ansprüche,
**dadurch gekennzeichnet,**
**dass** weitere Oligomere und / oder Polymere enthalten sind.

30. Verwendung strahlenhärtbarer Harze nach Anspruch 29,
**dadurch gekennzeichnet,**
**dass** weitere Oligomere und/oder Polymere ausgewählt aus der Gruppe der Polyurethane, Polyester, Polyacrylate, Polyolefine, Naturharze, Epoxidharze, Silikonöle und -harze, Aminharze, fluorhaltigen Polymere und ihre Derivate allein oder in Kombination enthalten sind.

31. Verwendung strahlenhärtbarer Harze nach mindestens einem der vorherigen Ansprüche,
**dadurch gekennzeichnet,**
**dass** Hilfs- und Zusatzstoffe enthalten sind.

32. Verwendung strahlenhärtbarer Harze nach Anspruch 32,
**dadurch gekennzeichnet,**
**dass** Hilfs- und Zusatzstoffe, ausgewählt aus Inhibitoren, organischen Lösemitteln, die ggf. ungesättigte Gruppierungen enthalten, grenzflächenaktiven Substanzen, Sauerstoff- und/oder Radikalfängern, Katalysatoren, Lichtschutzmitteln, Farbaufhellern, Photoinitiatoren, Photosensibilisatoren, Thixotropiermitteln, Hautverhinderungsmitteln, Entschäumern, Farbstoffen, Pigmenten, Füllstoffen und/oder Mattierungsmittel, enthalten sind.

## Claims

1. Use of radiation-curable resins obtained by polymer-analogously reacting
A) at least one ketone-aldehyde resin
and/or
B) at least one urea-aldehyde resin
and
C) at least one compound comprising at least one ethylenically unsaturated moiety and at the same time at least one moiety which is reactive toward A) and/or B),
as a main component, base component or additional component in radiation-curing adhesives, inks, including printing inks, polishes, varnishes, pigment pastes and masterbatches, fillers, sealants and insulants and/or cosmetic articles.

2. Use of radiation-curable resins according to Claim 1, obtained by polymer-analogously reacting
A) at least one ketone-aldehyde resin
and/or
B) at least one urea-aldehyde resin
and
C) at least one compound comprising at least one ethylenically unsaturated moiety and at the same time at least one moiety which is reactive toward A) and/or B), and at least one further hydroxyl-functionalized polymer.

3. Use of radiation-curable resins according to Claim 2, **characterized in that** polyethers, polyesters and/or polyacrylate are contained as further hydroxy-functional polymers.

4. Use of radiation-curable resins according to Claim 2 or 3, wherein mixtures of the further polymers with the ketone-aldehyde resins A) and/or urea-aldehyde resins B) are reacted polymer-analogously with component C).

5. Use of radiation-curable resins according to Claim 2 to 4, wherein first of all adducts of the ketone-aldehyde resins A) and/or urea-aldehyde resins B) with the further polymers, using suitable di- and triisocyanates, are prepared, and these adducts are then reacted polymer-analogously with component C).

6. Use of radiation-curable resins according to at least one of the preceding claims, **characterized in that** C-H-acidic ketones are used in component A).

7. Use of radiation-curable resins according to at least one of the preceding claims, **characterized in that** ketones selected from acetone, acetophenone, methyl ethyl ketone, tert-butyl methyl ketone, heptan-2-one, pentan-3-one, methyl isobutyl ketone, cyclopentanone, cyclododecanone, mixtures of 2,2,4- and 2,4,4-trimethylcyclopentanone, cycloheptanone, cyclooctanone, and cyclohexanone are used as starting compounds, alone or in mixtures, in the ketone-aldehyde resins of component A).

8. Use of radiation-curable resins according to at least one of the preceding claims, **characterized in that** alkyl-substituted cyclohexanones having one or more alkyl radicals containing in total 1 to 8 carbon atoms, individually or in a mixture, are used in the ketone-aldehyde resins of component A).

9. Use of radiation-curable resins according to Claim 8, **characterized in that** 4-tert-amylcyclohexanone, 2-sec-butylcyclohexanone, 2-tert-butylcyclohexanone, 4-tert-butylcyclohexanone, 2-methylcyclohexanone, and 3,3,5-trimethylcyclohexanone are used in the ketone-aldehyde resins of component A).

10. Use of radiation-curable resins according to at least one of the preceding claims, **characterized in that** acetophenone, cyclohexanone, 4-tert-butylcyclohexanone, 3,3,5-trimethylcyclohexanone, and heptanone, alone or in a mixture, are used in component A).

11. Use of a radiation-curable resin according to at least one of the preceding claims, **characterized in that** formaldehyde, acetaldehyde, n-butyraldehyde and/or isobutyraldehyde, valeraldehyde, and dodecanal, alone or in mixtures, are used as aldehyde component of the ketone-aldehyde resins in component A).

12. Use of radiation-curable resins according to Claim 11, **characterized in that** formaldehyde and/or paraformaldehyde and/or trioxane are used as aldehyde component of the ketone-aldehyde resins in component A).

13. Use of radiation-curable resins according to Claim 1 or 2, **characterized in that** resins formed from acetophenone, cyclohexanone, 4-tert-butylcyclohexanone, 3,3,5-trimethylcyclohexanone, and heptanone, alone or in a mixture, and formaldehyde (component A) are used.

14. Use of radiation-curable resins according to any one of the preceding claims, **characterized in that** as component B) use is made of urea-aldehyde resins prepared using a urea of the general formula (i) 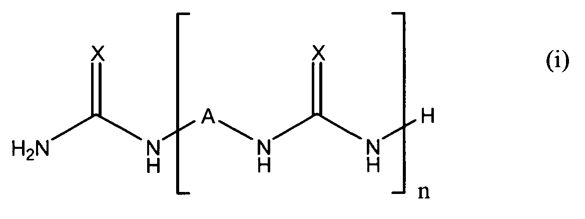 in which X is oxygen or sulfur, A is an alkylene radical, and n is from 0 to 3, with from 1.9 (n + 1) to 2.2 (n + 1) mol of an aldehyde of the general formula (ii) 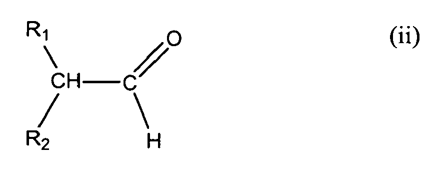 in which R₁ and R₂ are hydrocarbon radicals each having up to 20 carbon atoms and/or formaldehyde are used.

15. Use of radiation-curable resins according to any one of the preceding claims, **characterized in that** urea-aldehyde resins prepared using urea and thiourea, methylenediurea, ethylenediurea, tetramethylenediurea and/or hexamethylenediurea or mixtures thereof are used as component B).

16. Use of radiation-curable resins according to any one of the preceding claims, **characterized in that** urea-aldehyde resins prepared using isobutyraldehyde, formaldehyde, 2-methylpentanal, 2-ethylhexanal, and 2-phenylpropanal or mixtures thereof are used as component B).

17. Use of radiation-curable resins according to any one of the preceding claims, **characterized in that** urea-aldehyde resins prepared using urea, isobutyraldehyde, and formaldehyde are used as component B).

18. Use of radiation-curable resins according to at least one of the preceding claims, **characterized in that** maleic acid is used as component C).

19. Use of radiation-curable resins according to at least one of the preceding claims, **characterized in that** (meth)acrylic acid and/or derivatives are used as component C).

20. Use of radiation-curable resins according to Claim 19, **characterized in that** (meth)acryloyl chloride, glycidyl (meth)acrylate, (meth)acrylic acid and/or the low molecular mass alkyl esters and/or anhydrides thereof, alone or in a mixture, are used as component C).

21. Use of radiation-curable resins according to at least one of the preceding claims, **characterized in that** isocyanates which possess an ethylenically unsaturated moiety, preferably (meth)acryoyl isocyanate, α,α-dimethyl-3-isopropenylbenzyl isocyanate, (meth)acryloylalkyl isocyanate with alkyl spacers possessing 1 to 12, preferably 2 to 8, more preferably 2 to 6 carbon atoms, preferably methacryloylethyl isocyanate and/or methacryloylbutyl isocyanate, are used as component C).

22. Use of radiation-curable resins according to at least one of the preceding claims, **characterized in that** reaction products of hydroxyalkyl (meth)acrylates whose alkyl spacers possess 1 to 12, preferably 2 to 8, more preferably 2 to 6 carbon atoms with diisocyanates and/or polyisocyanates are used as component C).

23. Use of radiation-curable resins according to Claim 22, **characterized in that** diisocyanates selected from cyclohexane diisocyanate, methylcyclohexane diisocyanate, ethylcyclohexane diisocyanate, propylcyclohexane diisocyanate, methyldiethylcyclohexane diisocyanate, phenylene diisocyanate, tolylene diisocyanate, bis(isocyanatophenyl)methane, propane diisocyanate, butane diisocyanate, pentane diisocyanate, hexane diisocyanate such as, for example, hexamethylene diisocyanate (HDI) or 1,5-diisocyanato-2-methylpentane (MPDI), heptane diisocyanate, octane diisocyanate, 1,6-diisocyanato-2,4,4-trimethylhexane, 1,6-diisocyanato-2,2,4-trimethylhexane (TMDI), 4-isocyanatomethyloctane 1,8-diisocyanate (TIN), decane di- and triisocyanate, undecane di- and triisocyanate, dodecane di- and triisocyanates, isophorone diisocyanate (IPDI), bis(isocyanatomethylcyclohexyl)methane (H₁₂MDI), isocyanatomethylmethylcyclohexyl isocyanate, 2,5(2,6)-bis(isocyanatomethyl)bicyclo-[2.2.1]heptane (NBDI), 1,3-bis(isocyanatomethyl)cyclohexane (1,3-H₆-XDI), 1,4-bis(isocyanatomethyl)cyclohexane (1,4-H₆-XDI), alone or in mixtures, are used.

24. Use of radiation-curable resins according to Claim 23, **characterized in that** polyisocyanates prepared by trimerizing, allophanatizing, biuretizing and/or urethanizing simple diisocyanates are used.

25. Use of radiation-curable resins according to at least one of the preceding claims, **characterized in that** the reaction products in a molar ratio of from 1:1 to 1:1.5, preferably 1:1, of hydroxyethyl acrylate and/or hydroxyethyl methacrylate with isophorone diisocyanate and/or H₁₂MDI and/or HDI are used as component C).

26. Use of radiation-curable resins according to at least one of the preceding claims, **characterized in that** 1 mol of the ketone-aldehyde resin and/or urea-aldehyde resin - based on Mₙ - and from 0.5 to 15 mol, preferably from 1 to 10 mol, in particular from 2 to 8 mol of the unsaturated compound are used.

27. Use of radiation-curable resins according to at least one of the preceding claims as a main, base or additional component in radiation-curing coating materials such as primers, surfacers, basecoat, topcoat, and clearcoat materials and also in radiation-curing adhesives, inks, including printing inks, polishes, varnishes, pigment pastes and masterbatches, fillers, cosmetic articles and/or sealants and insulants.

28. Use of radiation-curable resins according to at least one of the preceding claims for metals, plastics, wood, paper, textiles, and glass and also mineral substrates.

29. Use of radiation-curable resins according to at least one of the preceding claims, **characterized in that** further oligomers and/or polymers are present.

30. Use of radiation-curable resins according to Claim 29, **characterized in that** further oligomers and/or polymers selected from the group consisting of polyurethanes, polyesters, polyacrylates, polyolefins, natural resins, epoxy resins, silicone oils and silicone resins, amine resins, fluoro polymers and derivatives thereof are present, alone or in combination.

31. Use of radiation-curable resins according to at least one of the preceding claims, **characterized in that** auxiliaries and additives are present.

32. Use of radiation-curable resins according to Claim 32, **characterized in that** auxiliaries and additives selected from inhibitors, organic solvents, with or without unsaturated moieties, surface-active substances, oxygen scavengers and/or free-radical scavengers, catalysts, light stabilizers, color brighteners, photoinitiators, photosensitizers, thixotropic agents, antiskinning agents, defoamers, dyes, pigments, fillers and/or dulling agents are present.

## Revendications

1. Utilisation de résines durcissables par irradiation, obtenues par une réaction, conduisant à un polymère analogue, de
A) au moins une résine cétone-aldéhyde ;
et/ou
B) au moins une résine urée-aldéhyde,
avec
C) au moins un composé qui comporte au moins un groupement à insaturation éthylénique et en même temps au moins un groupement réactif vis-à-vis de A) et B),
en tant que composant principal, composant de base ou composant supplémentaire dans des adhésifs, encres d'imprimerie et encres, vernis pour meubles, glacis, pâtes de pigments et mélanges-maîtres, mastics, matières d'étanchéité et matières isolantes et/ou articles cosmétiques, durcissant par irradiation.

2. Utilisation de résines durcissables par irradiation, selon la revendication 1, obtenues par une réaction, conduisant à un polymère analogue, de
A) au moins une résine cétone-aldéhyde ;
et/ou
B) au moins une résine urée-aldéhyde,
avec
C) au moins un composé qui comporte au moins un groupement à insaturation éthylénique et en même temps au moins un groupement réactif vis-à-vis de A) et B), et au moins un autre polymère à fonction hydroxy.

3. Utilisation de résines durcissables par irradiation, selon la revendication 2, **caractérisée en ce que** des polyéthers, des polyesters et/ou un polyacrylate sont contenus en tant que polymères à fonction hydroxy.

4. Utilisation de résines durcissables par irradiation, selon la revendication 2 ou 3, dans laquelle on fait réagir avec le composant C), par une réaction conduisant à des polymères analogues, des mélanges des autres polymères avec les résines cétone-aldéhyde A) et/ou les résines urée-aldéhyde B).

5. Utilisation de résines durcissables par irradiation, selon l'une quelconque des revendications 2 à 4, dans laquelle on prépare d'abord des adduits formés à partir des résines cétone-aldéhyde A) et/ou des résines urée-aldéhyde B) avec les autres polymères, en utilisant des di- et/ou triisocyanates appropriés, qui ne sont qu'ensuite mis en une réaction, conduisant à des polymères analogues, avec le composant C).

6. Utilisation de résines durcissables par irradiation, selon au moins l'une des revendications précédentes, **caractérisée en ce qu'**on utilise des cétones à C-H acide dans le composant A)

7. Utilisation de résines durcissables par irradiation, selon au moins l'une des revendications précédentes, **caractérisée en ce que** dans les résines cétone-aldéhyde du composant A) on utilise des cétones choisies parmi l'acétone, l'acétophénone, la méthyléthylcétone, le tert-butyméthylcétone, l'heptanone-2, la pentanone-3, la méthylisobutylcétone, la cyclopentanone, la cyclododécanone, des mélanges de 2,2,4- et 2,4,4-triméthylcyclopentanone, la cycloheptanone, la cyclo-octanone, la cyclohexanone, comme composés de départ seuls ou en mélanges.

8. Utilisation de résines durcissables par irradiation, selon au moins l'une des revendications précédentes, **caractérisée en ce que** dans les résines cétone-aldéhyde du composant A) on utilise, seules ou en mélanges, des cyclohexanones substituées par alkyle, comportant un ou plusieurs radicaux alkyle qui comportent au total 1 à 8 atomes de carbone.

9. Utilisation de résines durcissables par irradiation, selon la revendication 8, **caractérisée en ce que** dans la résines cétone-aldéhyde du composant A) on utilise la 4-tert-amylcyclohexanone, la 2-sec-butylcyclohexanone, la 2-tert-butylcyclohexanone, la 4-tert-butylcyclohexanone, la 2-méthylcyclohexanone et la 3,3,5-triméthylcyclohexanone.

10. Utilisation de résines durcissables par irradiation, selon au moins l'une des revendications précédentes, **caractérisée en ce qu'**on utilise dans le composant A) l'acétophénone, la cyclohexanone, la 4-tert-butylcyclohexanone, la 3,3,5-triméthylcyclohexanone et l'heptanone, seules ou en mélange.

11. Utilisation de résines durcissables par irradiation, selon au moins l'une des revendications précédentes, **caractérisée en ce qu'**on utilise comme composant aldéhyde des résines cétone-aldéhyde dans le composant A) le formaldéhyde, l'acétaldéhyde, le n-butyraldéhyde et/ou l'isobutyraldéhyde, le valéraldéhyde, le dodécanal, seuls ou en mélanges.

12. Utilisation de résines durcissables par irradiation, selon la revendication 11, **caractérisée en ce qu'**on utilise comme composant aldéhyde des résines cétone-aldéhyde dans le composant A) le formaldéhyde et/ou le paraformaldéhyde et/ou le dioxanne.

13. Utilisation de résines durcissables par irradiation, selon la revendication 1 ou 2, **caractérisée en ce qu'**on utilise des résines à base d'acétophénone, de cyclophénone, de 4-tert-butylcyclohexanone, de 3,3,5-triméthylcyclohexanone, d'heptanone, seules ou en mélange, et de formaldéhyde (composant A).

14. Utilisation de résines durcissables par irradiation, selon au moins l'une des revendications précédentes, **caractérisée en ce qu'**on utilise comme composant B) des résines urée-aldéhyde préparées en utilisant une urée de formule générale (i) 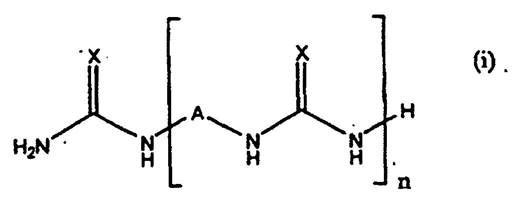 dans laquelle X représente un atome d'oxygène ou de soufre, A représente un radical alkylène et n va de 0 à 3,
avec 1,9(n+1) à 2,2(n+1) moles d'un aldéhyde de formule générale (ii) 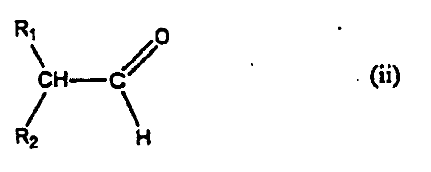 dans laquelle R₁ et R₂ représentent des radicaux hydrocarbonés ayant chacun jusqu'à 20 atomes de carbone
et/ou
du formaldéhyde.

15. Utilisation de résines durcissables par irradiation, selon l'une quelconque des revendications précédentes, **caractérisée en ce qu'**on utilise comme composant B) des résines urée-aldéhyde préparées avec utilisation d'urée et de thio-urée, méthylènediurée, éthylènediurée, triméthylènediurée et/ou hexaméthylènediurée ou de mélanges de celles-ci.

16. Utilisation de résines durcissables par irradiation, selon l'une quelconque des revendications précédentes, **caractérisée en ce qu'**on utilise comme composant B) des résines urée-aldéhyde préparées avec utilisation d'isobutyraldéhyde, de formaldéhyde, de 2-méthylpentanal, de 2-éthylhexanal et de 2-phénylpropanal ou de mélanges de ceux-ci.

17. Utilisation de résines durcissables par irradiation, selon l'une quelconque des revendications précédentes, **caractérisée en ce qu'**on utilise comme composant B) des résines urée-aldéhyde préparées avec utilisation d'urée, d'isobutyraldéhyde et de formaldéhyde.

18. Utilisation de résines durcissables par irradiation, selon l'une quelconque des revendications précédentes, **caractérisée en ce qu'**on utilise comme composant C) de l'acide maléique.

19. Utilisation de résines durcissables par irradiation, selon au moins l'une des revendications précédentes, **caractérisée en ce qu'**on utilise comme composant C) de l'acide (méth)acrylique et/ou des dérivés de cet acide.

20. Utilisation de résines durcissables par irradiation, selon la revendication 19, **caractérisée en ce qu'**on utilise comme composant C) du chlorure de (méth)acryloyle, du (méth)acrylate de glycidyle, de l'acide (méth)acrylique et/ou les anhydrides et/ou esters alkylique de faible masse moléculaire d'acide (méth)acrylique, seuls ou en mélange.

21. Utilisation de résines durcissables par irradiation, selon au moins l'une des revendications précédentes, **caractérisée en ce qu'**on utilise comme composant C) des isocyanates qui sont dotés d'un groupement à insaturation éthylénique, de préférence le (méth)acryloylisocyanate, 1'α,α-diméthyl-3-isopropénylbenzylisocyanate, le (méth)acrylalkylisocyanate avec des espaceurs alkyle qui comportent de 1 à 12, de préférence de 2 à 8, de façon particulièrement préférée de 2 à 6 atomes de carbone, de préférence le méthacryléthylisocyanate, le méthacrylbutylisocyanate.

22. Utilisation de résines durcissables par irradiation, selon au moins l'une des revendications précédentes, **caractérisée en ce qu'**on utilise comme composant C) des produits de réaction de (méth)acrylates d'hydroxyalkyle, dont les espaceurs alkyle comportent de 1 à 12, de préférence de 2 à 8, de façon particulièrement préférée de 2 à 6 atomes de carbone, avec des di- et/ou polyisocyanates.

23. Utilisation de résines durcissables par irradiation, selon la revendication 22, **caractérisée en ce qu'**on utilise des diisocyanates choisis parmi le cyclohexane-diisocyanate, le méthylcyclohexane-diisocyanate, l'éthylcyclohexane-diisocyanate, le propylcyclohexanediisocyanate, le méthyldiéthylcyclohexanediisocyanate, le phénylènediisocyanate, le toluylènediisocyanate, le bis(isocyanatophényl)-méthane, le propanediisocyanate, le butanediisocyanate, le pentanediisocyanate, l'hexanediisocyanate, par exemple tels que l'hexaméthylènediisocyanate (HDI) ou le 1,5-diisocyanato-2-méthylpentane (MPDI), l'heptanediisocyanate, l'octanediisocyanate, le 1,6-diisocyanato-2,4,4-triméthylhexane, le 1,6-diissocyanato-2,2,4-triméthylhexane (TMDI), le 4-isocyanatométhyl-1,8-octanediisocyanate (TIN), le décanediisocyanate et le décanetriisocyanate, l'undécanediisocyanate et l'undécanetriisocyanate, le dodécanediisocyanate et le dodécanetriisocyanate, l'isophorone-diisocyanate (IPDI), le bis(isocyanatométhyl-cyclohexyl)méthane (H₁₂MDI), l'isocyanatométhylméthylcyclohexylisocyanate, le 2,5(2,6)-bis(isocyanatométhyl)-bicyclo[2.2.1]heptane (NBDI), le 1,3-bis(isocyanatométhyl)cyclohexane (1,3-H₆-XDI), le 1,4-bis(isocyanatométhyl)cyclohexane (1,4-H₆-XDI), seuls ou en mélanges.

24. Utilisation de résines durcissables par irradiation, selon la revendication 23, **caractérisée en ce qu'**on utilise des polyisocyanates préparés par trimérisation, allophanation, biuretation et/ou uréthannation de diisocyanates simples.

25. Utilisation de résines durcissables par irradiation, selon au moins l'une des revendications précédentes, **caractérisée en ce qu'**on utilise comme composant (C) les produits de réaction en un rapport molaire allant de 1:1 à 1:1,5, de préférence de 1:1 d'acrylate d'hydroxyéthyle et/ou de méthacrylate d'hydroxyéthyle avec l'isophorone-diisocyanate et/ou H₁₂MDI et/ou HDI.

26. Utilisation de résines durcissables par irradiation, selon au moins l'une des revendications précédentes, **caractérisée en ce qu'**on utilise 1 mole de la résine cétone-aldéhyde et/ou de la résine urée-aldéhyde - par rapport à Mₙ - et de 0,5 à 15 moles, de préférence de 1 à 10 moles, en particulier de 2 à 8 moles du composé insaturé.

27. Utilisation de résines durcissables par irradiation, selon au moins l'une des revendications précédentes, en tant que composant principal, composant de base ou composant supplémentaire dans des matières de revêtement, telles que des apprêts, des enduits de garnissage, des peintures de fond, des peintures de finition et des vernis, durcissant par irradiation, ainsi que dans des adhésifs, encres d'imprimerie et encres, vernis pour meubles, glacis, pâtes de pigments et mélanges-maîtres, mastics, articles cosmétiques et/ou matières d'étanchéité et d'isolation, durcissant par irradiation.

28. Utilisation de résines durcissables par irradiation, selon au moins l'une des revendications précédentes, pour des métaux, des matières plastiques, le bois, le papier, des textiles et le verre, ainsi que des supports minéraux.

29. Utilisation de résines durcissables par irradiation, selon au moins l'une des revendications précédentes, **caractérisée en ce que** des autres oligomères et/ou polymères sont contenus.

30. Utilisation de résines durcissables par irradiation, selon la revendication 29, **caractérisée en ce que** les autres oligomères et/ou polymères sont choisis dans le groupe des polyuréthannes, polyesters, polyacrylates, polyoléfines, résines naturelles, résines époxy, huiles et résine de silicone, résines amine, polymères fluorés et leurs dérivés, seuls ou en association.

31. Utilisation de résines durcissables par irradiation, selon au moins l'une des revendications précédentes, **caractérisée en ce que** des adjuvants et additifs sont contenus.

32. Utilisation de résines durcissables par irradiation, selon la revendication 32, **caractérisée en ce que** sont contenus des adjuvants et additifs choisis parmi des inhibiteurs, des solvants organiques qui contiennent éventuellement des groupements insaturés, des substances tensioactives, des capteurs d'oxygène et/ou de radicaux, des catalyseurs, des photoprotecteurs, des agents d'éclaircissement, des photoamorceurs, des photosensibilisateurs, des agents de thixotropie, des agents anti-peau, des antimousses, des colorants, des pigments, des charges et/ou des agents de matité.
